# FASCICULE DE BREVET EUROPEEN

(11) **EP 1 693 139 B1**
(45) Date de publication et mention de la délivrance du brevet: **10.12.2008**
(21) Numéro de dépôt: 06300066.5
(22) Date de dépôt: 25.01.2006
(51) Int. Cl.: B23K 9/133, B65D 85/04, B65H 49/02

(54) **Conteneur de conditionnement de fil de soudage avec dispositif interne de retenue des spires**
Verpackungsbehälter für Schweissdraht mit innerer Haltevorrichtung für die Spiralen
Welding-wire packing container with internal winding retention system.

(30) Priorité: 17.02.2005 FR 0550450
(43) Date de publication de la demande: 23.08.2006
(73) Titulaire: AIR LIQUIDE WELDING FRANCE, 75007 Paris (FR)
(72) Inventeur: Rigot, Stephan, 51000 Chalons-en-Champagne (FR)
(74) Mandataire: Pittis, Olivier

(56) Documents cités:
- EP-A- 0 519 424
- US-A- 4 869 367
- US-A- 5 845 862
- PATENT ABSTRACTS OF JAPAN vol. 006, no. 086 (M-131), 25 mai 1982 (1982-05-25) & JP 57 023552 A (KOBE STEEL LTD), 6 février 1982 (1982-02-06)
- PATENT ABSTRACTS OF JAPAN vol. 006, no. 036 (M-115), 5 mars 1982 (1982-03-05) & JP 56 151175 A (KOBE STEEL LTD), 24 novembre 1981 (1981-11-24)
- PATENT ABSTRACTS OF JAPAN vol. 007, no. 009 (M-185), 14 janvier 1983 (1983-01-14) & JP 57 166269 A (KOBE SEIKOSHO KK), 13 octobre 1982 (1982-10-13)

## Description

La présente invention porte sur un conteneur de conditionnement de fil de soudage, dans lequel la bobine de fil est maintenue par un dispositif de retenue interne mobile à l'intérieur du fût permettant d'assurer efficacement un maintien en position des spires de fil.

Les fils ou fils-électrodes fusibles utilisés en soudage, en particulier en soudage automatique, sont classiquement conditionnés en bobines et placés dans des conteneurs ou fûts de conditionnement servant notamment à leur acheminement sur leur lieu d'utilisation.

Lors de son utilisation, c'est-à-dire pendant une opération de soudage, le fil est progressivement entraîné, au moyen d'un dispositif de dévidage de fil, et convoyé vers une torche de soudage où l'extrémité libre du fil métallique est progressivement fondue dans un arc électrique établi entre le fil et la pièce à souder, un faisceau laser ou analogue, et le métal du fil ainsi fondu est déposé sur la ou les pièces à souder de manière à former un joint de soudage, de brasage ou similaire.

Pendant le soudage, la bobine de fil se dévide progressivement au fur et à mesure de l'utilisation du fil.

Or, le fil métallique étant conditionné en bobine, il a tendance à former intempestivement des boucles et des noeuds, lors de son dévidage, lesquels posent des problèmes, tels que emmêlements, irrégularités de dévidage ou analogues.

Pour y remédier, plusieurs systèmes ont déjà été proposés, en particulier il est connu que l'utilisation d'un dispositif de retenue mobile, lequel est placé sur la bobine de manière à venir appuyer dessus pendant le dévidage du fil permet de diminuer ces formations de boucles et de noeuds. En effet, un tel dispositif tend à maintenir les spires de la bobine à leur place durant le déroulage progressif du fil et descend par gravité dans le fût au fur et à mesure de la sortie du fil.

Ainsi, les documents EP-A-1053189, EP-A-1357059, EP-A-1057751, EP-A-1295813, EP-A-1275595 et EP-A-1352838 proposent d'utiliser de tels dispositifs de retenue venant se placer sur la bobine de fil pour empêcher l'entremêlement des tours de fil lorsque le fil est extrait de la bobine. Ces dispositifs de retenue peuvent être associés à des dispositifs de guidage, fixés ou non au couvercle de fermeture du fût, pour guider le fil vers l'extérieur du fût lors de son déroulement.

De préférence, le dispositif de retenue est en contact, au moins en certains points, avec les parois internes du corps. Le contact peut être réalisé directement via les bords du dispositif de retenue lorsque celui-ci est une rondelle ou un disque circulaire ou polygonal conformé pour épouser les formes internes du fût ou alors indirectement par l'intermédiaire de pattes, de doigts, d'expansions ou analogues portés par le dispositif de retenue et venant en contact avec la paroi interne du fût ou guidés par des guides portés par la paroi du fût ou aménagés dans celle-ci.

Toutefois, bien que de nombreuses solutions existent, aucune n'est véritablement idéale car elles présentent toutes des inconvénients.

Par exemple, lorsque le dispositif de retenue est formé d'une rondelle ou d'un disque perforé en son centre pour laisser passer le fil et dimensionné pour venir au contact de la paroi interne du fût dans lequel est disposée la bobine, il est apparu en pratique que des spires de la bobine avaient tendance, du fait de leur élasticité, à soulever le disque et à passer entre la paroi interne du fût et le rebord du disque, ce qui provoque des emmêlements et des blocages du fil empêchant son bon dévidage.

Les solutions consistant à disposer des pattes ou analogues, sur la rondelle ou le disque, qui viennent au contact ou à proximité immédiate des parois du fût, comme décrit par le document US-A-5,845,862, ou alors sont guidés par des guides spécifiques de la paroi du fût conduisent soit aux mêmes problèmes, soit engendrent une complexité excessive du système et augmente considérablement son coût de fabrication.

Le problème qui se pose alors est de proposer alors un fût de conditionnement de fil de soudage qui ne présente pas les inconvénients susmentionnés, en particulier qui soit de réalisation simple et peu onéreuse, et qui permette un bon maintien en place du fil pendant le dévidage, en empêchant efficacement en particulier la formation de noeuds et l'emmêlement des spires de fil.

La solution apportée par la présente invention est un conteneur de conditionnement de fil de soudage comprenant un fût pour recevoir le fil de soudage, et un dispositif de retenue de fil venant se positionner dans le fût de manière à venir appuyer sur les spires de fil, comprenant une partie centrale rigide percée d'un orifice central au travers duquel passe le fil, ladite partie centrale ayant une dimension inférieure au diamètre interne du fût, caractérisé en ce que le dispositif de retenue de fil comprend, en outre, une partie périphérique souple et déformable formée d'une ou plusieurs feuilles et ayant une dimension supérieure au diamètre interne du fût.

Selon le cas, le conteneur de l'invention peut comprendre l'une ou plusieurs des caractéristiques suivantes :
- le fût est de forme cylindrique ou polygonale.
- la partie centrale et une partie périphérique sont solidarisées l'une de l'autre.
- la partie centrale portant l'orifice central a une forme de disque ou une forme polygonale, de préférence la partie centrale est métallique.
- la partie périphérique souple et déformable est formée d'une ou plusieurs feuilles de polymère, en particulier d'une housse en plastique.
- la partie périphérique est de forme polygonale, de préférence de forme carrée.
- lorsque le dispositif de retenue de fil est inséré dans le fût, une ou plusieurs portions de la partie périphérique se déforment en épousant les contours internes du fût, de préférence la partie périphérique est de forme polygonale et les portions de ladite partie périphérique se déformant sont des portions d'angles.
- le fil est inséré dans le fût entre le fond du fût et le dispositif de retenue de fil, ledit fût étant surmonté d'un couvercle.

L'invention porte aussi sur un dispositif de retenue de fil en tant que tel pour conteneur de conditionnement de fil de soudage.

En outre, l'invention concerne également une installation automatisée de soudage à l'arc avec fil fusible comprenant une torche de soudage à l'arc alimentée en fil fusible, caractérisée en ce que le fil est issu d'un conteneur de conditionnement selon l'invention.

Un conteneur de conditionnement de fil de soudage selon l'invention est schématisé sur les Figures annexées.

Le conteneur est formé d'un fût 1 muni d'un fond 9 inférieur et est dimensionné pour recevoir le fil 4 de soudage pré-torsionné et venant se lover dans le fût 1 en une couronne 5 de fil, communément appelée bobine.

Un dispositif de retenue 2 de fil 4 est inséré dans le fût 1 et vient se positionner sur la bobine 5 de manière à venir appuyer, par gravité, sur les spires de fil 4 en les maintenant en position durant le dévidage du fil 4, pendant son utilisation en soudage.

Le dispositif de retenue 2 est mobile axialement dans le fût 1 puisqu'il y descend progressivement au fur et à mesure de l'extraction du fil 4 et donc de la diminution de la hauteur de la bobine 5.

Le fût 1 est, en outre, surmonté d'un couvercle 10 supérieur qui peut être dissociable ou non du fût 1. Le fût 1 peut être cylindrique ou polygonal, mais en général il est cylindrique à paroi verticale.

Le fond 9 et le couvercle 10 peuvent être formé d'une seule pièce avec le fût 1, par exemple au sein d'une même feuille épaisse de carton ou analogue, découpée et conformée aux dimensions souhaitées, ou alors de plusieurs pièces ou éléments associés les uns aux autres pour former le conteneur, par exemple des pièces en carton ou similaires.

Pour faciliter son transport, le conteneur de l'invention peut être agencé sur une palette de transport et/ou équipé de sangles ou analogues pour permettre son levage sur son lieu d'utilisation.

De façon analogue, le fût 1 peut lui même être inséré dans une boîte externe, par exemple une boîte de forme polygonale, telle qu'une boite carrée (non représentée).

Selon l'invention, le dispositif de retenue 2 de fil comprend une partie centrale 6 rigide percée d'un orifice 3 central au travers duquel passe le fil 4 et une partie périphérique 7 souple et déformable.

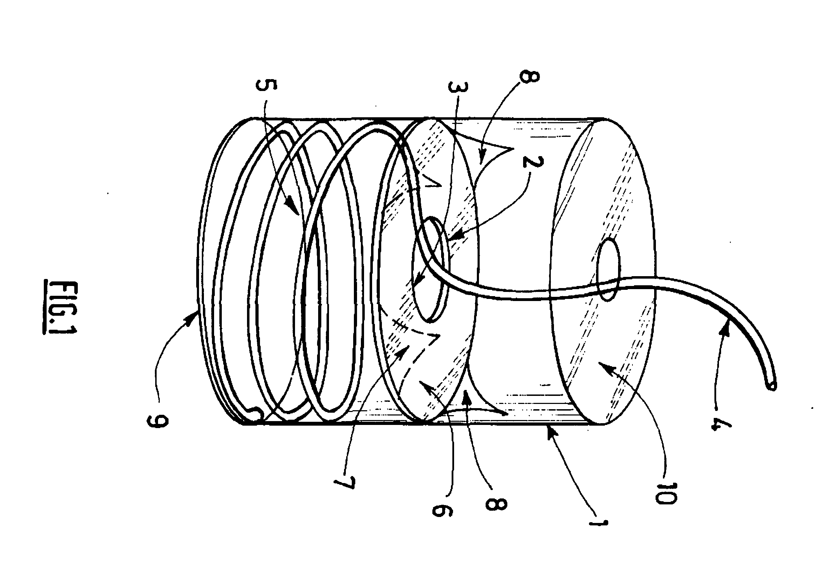

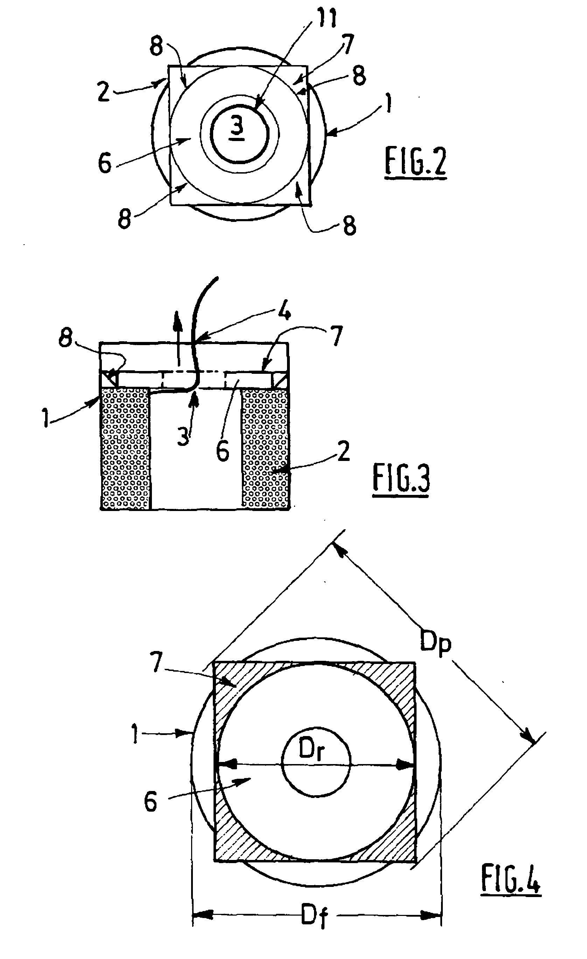

Dans le mode de réalisation des Figures 1 à 3, la partie centrale 6 a une forme de couronne ou disque percé en son centre de l'orifice 3, tandis que la partie périphérique 7 est formée d'une ou plusieurs feuilles de préférence en un matériau plastique (polymère) résistant à l'usure par frottement du fil 4 lors de son déroulement.

Dans tous les cas, la partie centrale 6 a une dimension Dr, par exemple un diamètre du disque percé, inférieure au diamètre Df interne du fût 1, alors que la partie périphérique 7 souple et déformable a au moins une dimension Dp, par exemple une longueur de diagonale Dp dans le cas d'une feuille carrée, supérieure au diamètre Df interne du fût 1.

La partie centrale 6 peut être fixée à la partie périphérique 7 par tout moyen de fixation approprié, par exemple par collage.

Toutefois, la partie centrale 6 peut être simplement solidarisée à la partie périphérique 7 par le biais d'un dimensionnement précis de l'une par rapport à l'autre, comme expliqué ci-après.

Afin d'assurer un appui efficace du dispositif de retenue 2 sur les spires, celui-ci est réalisé en un matériau lourd, tel un métal ou un alliage métallique, par exemple en acier ou analogue, ou alors il est lesté avec un lest présentant un poids suffisant pour obtenir le maintien souhaitée des spires de fil.

Le fait que la partie périphérique 7 soit souple et déformable et ait au moins une dimension Dp supérieure au diamètre Df interne du fût 1 permet à cette partie 7 d'épouser parfaitement les contours de la paroi interne du fût 1 puisque les portions d'angles 8 de cette partie 7 remontent légèrement le long de ladite paroi interne du fût 1, comme schématisé sur la figure 1, en empêchant ainsi que les spires de fil 4 ne puissent passer entre le bord périphérique du disque 6 central et la paroi interne du fût 1.

Les portions 8 débordantes de la ou des feuilles 7 plastiques, c'est-à-dire allant au-delà du rebord périphérique du disque 6, doivent impérativement se situer au-dessus du disque 6, c'est-à-dire déboucher du côté supérieur du fût par lequel le fil 4 est extrait.

Afin d'assurer un meilleur dévidage du fil 4, de façon connue en soi, un cylindre 11 de guidage peut être inséré au centre de la bobine 5 de fil 4 et avoir un diamètre externe inférieur au diamètre de l'orifice 3 de manière à permettre le passage dudit cylindre 11 de guidage au travers du l'orifice 3 au fur et à mesure du dévidage du fil.

Le dispositif de retenue 2 peut être fabriqué facilement, par exemple à partir d'un disque 6 perforé 3 en acier, par exemple obtenu par découpe au laser d'une tôle d'acier, que l'on positionne dans une housse parallélépipédique en matériau plastique formant la partie périphérique 7.

Dans ce cas, la paroi de la housse constituent les feuilles en polymère de la partie périphérique 7. Le terme « housse » désigne toute poche, sac ou similaire de dimensions suffisantes pour recevoir le disque 6.

L'ouverture de la housse est ensuite rabattue et la housse fermée par soudure thermique, collage, agrafage ou similaire, ce qui permet de solidariser le disque 6 et les parois de la housse 7 en plastique sans obliger à les coller l'un avec l'autre.

Enfin, on réalise une découpe centrale de la housse en regard de l'orifice 3 du disque 6 de manière à pouvoir y faire passer le fil 4.

Le dispositif de retenue 2 est alors prêt à être mis en fonction dans le fût 1 comme expliqué ci-avant en prenant le soin de positionner les portions 8 d'angles de la housse souple en polymère 7 vers la partie supérieure du fût 1.

Le conteneur de l'invention est facile à fabriquer, de coût faible, de mise en oeuvre facile et a présenté une grande efficacité lors de tests de faisabilité ayant été réalisés.

Le conteneur de conditionnement de fil de l'invention peut être utilisé pour alimenter une installation automatisée de soudage à l'arc avec fil fusible comprenant une torche de soudage à l'arc alimentée en un ou plusieurs fils fusibles, en particulier pour le soudage MIG ou MAG, ou pour le soudage hybride laser-arc avec électrode fusible, notamment robotisé .

## Revendications

1. Conteneur de conditionnement de fil de soudage comprenant un fût (1) pour recevoir le fil (4) de soudage, et un dispositif de retenue (2, 3, 6, 7) de fil venant se positionner dans le fût (1) de manière à venir appuyer sur les spires de fil (4), comprenant une partie centrale (6) rigide percée d'un orifice (3) central au travers duquel passe le fil (4), ladite partie centrale (6) ayant une dimension (Dr) inférieure au diamètre (Df) interne du fût (1), **caractérisé en ce que** le dispositif de retenue (2, 3, 6, 7) de fil comprend, en outre, une partie périphérique (7) souple et déformable formée d'une ou plusieurs feuilles et ayant une dimension (Dp) supérieure au diamètre (Df) interne du fût (1).

2. Conteneur selon la revendication 1, **caractérisé en ce que** la partie périphérique (7) souple et déformable est formée d'une ou plusieurs feuilles de polymère, de préférence une housse en polymère.

3. Conteneur selon les revendications 1 ou 2, **caractérisé en ce que** la partie centrale (6) et une partie périphérique (7) sont solidarisées l'une à l'autre.

4. Conteneur selon les revendications 1 à 3, **caractérisé en ce que** la partie centrale (6) portant l'orifice (3) central a une forme de disque ou une forme polygonale, de préférence la partie centrale (6) est métallique.

5. Conteneur selon les revendications 1 à 4, **caractérisé en ce que** la partie périphérique (7) est de forme polygonale, de préférence de forme carrée.

6. Conteneur selon les revendications 1 à 5, **caractérisé en ce que,** lorsque le dispositif de retenue (2, 3, 6, 7) de fil est inséré dans le fût (1), une ou plusieurs portions (8) de la partie périphérique (7) se déforment en épousant les contours internes du fût (1).

7. Conteneur selon la revendication 6, **caractérisé en ce que** de la partie périphérique (7) est de forme polygonale et les portions (8) de ladite partie périphérique (7) se déformant sont des portions d'angles.

8. Conteneur selon les revendications 1 à 7, **caractérisé en ce que** le fil est inséré dans le fût (1) entre le fond (9) du fût (1) et le dispositif de retenue (2, 3, 6, 7) de fil, ledit fût (1) étant surmonté d'un couvercle (10).

9. Conteneur selon les revendications 1 à 8, **caractérisé en ce que** le fût (1) est de forme cylindrique ou polygonale.

10. Dispositif de retenue (2, 3, 6, 7) de fil pour conteneur de conditionnement de fil (4) de soudage, comprenant une partie centrale (6) rigide percée d'un orifice (3) central au travers duquel passe le fil (4), ladite partie centrale (6) ayant une dimension (Dr) inférieure au diamètre (Df) interne du fût (1), **caractérisé en ce qu'**il comprend, en outre, une partie périphérique (7) souple et déformable formée d'une ou plusieurs feuilles et ayant une dimension (Dp) supérieure au diamètre (Df) interne du fût (1).

11. Dispositif selon la revendication 10, **caractérisé en ce que** la partie périphérique (7) souple et déformable étant de polymère.

12. Installation automatisée de soudage à l'arc avec fil (4) fusible comprenant une torche de soudage à l'arc alimentée en fil (4) fusible, **caractérisée en ce que** le fil (4) est issu d'un conteneur de conditionnement selon l'une des revendication 1 à 9 ou d'un conteneur avec dispositif de retenue interne (2, 3, 6, 7) de fil selon l'une des revendications 10 ou 11.

## Claims

1. Container for packaging welding wire comprising a drum (1) for receiving the welding wire (4), and a device (2, 3, 6, 7) for retaining the wire being placed in the drum (1) so as to come to press down on the turns of wire (4), comprising a central rigid part (6) pierced by a central orifice (3) through which the wire (4) passes, said central part (6) having a dimension (Dr) smaller than the internal diameter (Df) of the drum (1), **characterized in that** the wire-retention device (2, 3, 6, 7) comprises, in addition, a flexible and deformable peripheral part (7) formed from one or more sheets and that has a dimension (Dp) larger than the internal diameter (Df) of the drum (1).

2. Container according to Claim 1, **characterized in that** the flexible and deformable peripheral part (7) is formed from one or more layers of polymer, preferably a polymer cover.

3. Container according to Claims 1 or 2, **characterized in that** the central part (6) and a peripheral part (7) are firmly attached to one another.

4. Container according to Claims 1 to 3, **characterized in that** the central part (6) bearing the central orifice (3) is disc-shaped or has a polygonal shape, preferably the central part (6) is metallic.

5. Container according to Claims 1 to 4, **characterized in that** the peripheral part (7) is of polygonal shape, preferably of square shape.

6. Container according to Claims 1 to 5, **characterized in that,** when the wire-retention device (2, 3, 6, 7) is inserted into the drum (1), one or more portions (8) of the peripheral part (7) are deformed by following the inner contours of the drum (1).

7. Container according to Claim 6, **characterized in that** the peripheral part (7) is of polygonal shape and the portions (8) of said peripheral part (7) that are deformed are corner portions.

8. Container according to Claims 1 to 7, **characterized in that** the wire is inserted into the drum (1) between the base (9) of the drum (1) and the wire-retention device (2, 3, 6, 7), said drum (1) being surmounted by a lid (10).

9. Container according to Claims 1 to 8, **characterized in that** the drum (1) is of cylindrical or polygonal shape.

10. Wire-retention device (2, 3, 6, 7) for a container for packaging welding wire (4), comprising a central rigid part (6) pierced by a central orifice (3) through which the wire (4) passes, said central part (6) having a dimension (Dr) smaller than the internal diameter (Df) of the drum (1), **characterized in that** it comprises, in addition, a flexible and deformable peripheral part (7) formed from one or more sheets and that has a dimension (Dp) larger than the internal diameter (Df) of the drum (1).

11. Device according to Claim 10, **characterized in that** the flexible and deformable peripheral part (7) is made from a polymer.

12. Automated installation for arc welding with consumable wire (4) comprising an arc-welding torch fed with consumable wire (4), **characterized in that** the wire (4) comes from a packaging container according to one of Claims 1 to 9 or from a container with an internal wire-retention device (2, 3, 6, 7) according to either of Claims 10 and 11.

## Patentansprüche

1. Verpackungsbehälter für einen Schweißdraht, umfassend einen Schaft (1) für die Aufnahme des Schweißdrahtes (4) und eine Haltevorrichtung (2, 3, 6, 7) für den Draht, die in dem Schaft (1) derart angeordnet wird, dass sie auf die Drahtspiralen (4) drückt, umfassend einen starren Mittelteil (6), der mit einer Mittelöffnung (3) versehen ist, durch die der Draht (4) verläuft, wobei der Mittelteil (6) eine kleinere Abmessung (Dr) als der Innendurchmesser (Df) des Schaftes (1) hat, **dadurch gekennzeichnet, dass** die Drahthaltevorrichtung (2, 3, 6, 7) ferner einen biegsamen und verformbaren Umfangsteil (7) umfasst, der von einer oder mehreren Schichten gebildet ist und eine größere Abmessung (Dp) als der Innendurchmesser (Df) des Schaftes (1) hat.

2. Behälter nach Anspruch 1, **dadurch gekennzeichnet, dass** der biegsame und verformbare Umfangsteil (7) von einer oder mehreren Polymerschichten, vorzugsweise einem Polymerüberzug, gebildet ist.

3. Behälter nach den Ansprüchen 1 oder 2, **dadurch gekennzeichnet, dass** der Mittelteil (6) und ein Umfangsteil (7) miteinander verbunden sind.

4. Behälter nach den Ansprüchen 1 bis 3, **dadurch gekennzeichnet, dass** der Mittelteil (6), der die Mittelöffnung (3) trägt, eine Scheibenform oder polygonale Form aufweist, wobei der Mittelteil (6) vorzugsweise metallisch ist.

5. Behälter nach den Ansprüchen 1 bis 4, **dadurch gekennzeichnet, dass** der Umfangsteil (7) von polygonaler Form, vorzugsweise quadratischer Form, ist.

6. Behälter nach den Ansprüchen 1 bis 5, **dadurch gekennzeichnet, dass** sich, wenn die Drahthaltevorrichtung (2, 3, 6, 7) in den Schaft (1) eingesetzt ist, ein oder mehrere Abschnitte (8) des Umfangsteils (7) verformen, wobei sie sich an die Innenkonturen des Schaftes (1) anlegen.

7. Behälter nach Anspruch 6, **dadurch gekennzeichnet, dass** der Umfangsteil (7) polygonale Form hat, und dass die Abschnitte (8) des Umfangsteils (7), die sich verformen, Winkelabschnitte sind.

8. Behälter nach den Ansprüchen 1 bis 7, **dadurch gekennzeichnet, dass** der Draht in den Schaft (1) zwischen dem Boden (9) des Schaftes (1) und der Drahthaltevorrichtung (2, 3, 6, 7) eingesetzt wird, wobei auf dem Schaft (1) ein Deckel (10) montiert ist.

9. Behälter nach den Ansprüchen 1 bis 8, **dadurch gekennzeichnet, dass** der Schaft (1) zylindrische oder polygonale Form hat.

10. Drahthaltevorrichtung (2, 3, 6, 7) für einen Verpackungsbehälter für einen Schweißdraht (4), umfassend einen starren Mittelteil (6), der mit einer Mittelöffnung (3) versehen ist, durch die der Draht (4) verläuft, wobei der Mittelteil (6) eine kleinere Abmessung (Dr) als der Innendurchmesser (Df) des Schaftes (1) hat, **dadurch gekennzeichnet, dass** sie ferner einen biegsamen und verformbaren Umfangsteil (7) umfasst, der von einer oder mehreren Schichten gebildet ist und eine größere Abmessung (Dp) als der Innendurchmesser (Df) des Schaftes (1) hat.

11. Vorrichtung nach Anspruch 10, **dadurch gekennzeichnet, dass** der biegsame und verformbare Umfangsteil (7) aus Polymer ist.

12. Automatische Lichtbogenschweißanlage mit Schmelzdraht (4), umfassend einen Lichtbogenschweißbrenner, der mit einem Schmelzdraht (4) versorgt wird, **dadurch gekennzeichnet, dass** der Draht (4) aus einem Verpackungsbehälter nach einem der Ansprüche 1 bis 9 oder einem Behälter mit innerer Drahthaltevorrichtung (2, 3, 6, 7) nach einem der Ansprüche 10 oder 11 kommt.
